(19) **Europäisches Patentamt**

**European Patent Office**

**Office européen des brevets**

(11) **EP 1 647 118 B1**

(12) **EUROPÄISCHE PATENTSCHRIFT**

(45) Veröffentlichungstag und Bekanntmachung des Hinweises auf die Patenterteilung:
**15.11.2006 Patentblatt 2006/46**

(21) Anmeldenummer: **04738875.6**

(22) Anmeldetag: **07.07.2004**

(51) Int Cl.:
*H04L 25/03* $^{(2006.01)}$    *H04L 1/06* $^{(2006.01)}$

(86) Internationale Anmeldenummer:
**PCT/DE2004/001455**

(87) Internationale Veröffentlichungsnummer:
**WO 2005/011219 (03.02.2005 Gazette 2005/05)**

(54) **NICHTLINEARES VORKODIERUNGSVERFAHREN FÜR EINEN DIGITALEN BROADCASTKANAL**

NONLINEAR PRECODING METHOD FOR A DIGITAL BROADCAST CHANNEL

PROCEDE DE PRECODAGE NON LINEAIRE POUR CANAL DE DIFFUSION NUMERIQUE

(84) Benannte Vertragsstaaten:
**DE ES FR GB IT TR**

(30) Priorität: **17.07.2003 DE 10333514**

(43) Veröffentlichungstag der Anmeldung:
**19.04.2006 Patentblatt 2006/16**

(73) Patentinhaber: **SIEMENS AKTIENGESELLSCHAFT**
**80333 München (DE)**

(72) Erfinder:
• **FISCHER, Robert**
**91056 Erlangen (DE)**
• **WINDPASSINGER, Christoph**
**91052 Erlangen (DE)**

(56) Entgegenhaltungen:
• **WINDPASSINGER C ET AL: "Low-complexity near-maximum-likelihood detection and precoding for MIMO systems using lattice reduction" PROCEEDINGS ITW 2003 , PARIS, FRANCE, MARCH 31- APRIL 4, 2003, 31. März 2003 (2003-03-31), Seiten 345-348, XP010647658 IEEE, PISCATAWAY, USA in der Anmeldung erwähnt**
• **FISCHER R F H ET AL: "MIMO precoding for decentralized receivers" PROCEEDINGS 2002 IEEE INTERNATIONAL SYMPOSIUM ON INFORMATION THEORY. ISIT 02. LAUSANNE, SWITZERLAND, JUNE 30 - JULY 5, 2002, IEEE INTERNATIONAL SYMPOSIUM ON INFORMATION THEORY, NEW YORK, NY : IEEE, US, 30. Juni 2002 (2002-06-30), Seiten 496-496, XP010602207 ISBN: 0-7803-7501-7**
• **YU W ET AL: "TRELLIS PRECODING FOR THE BROADCAST CHANNEL" GLOBECOM'01. 2001 IEEE GLOBAL TELECOMMUNICATIONS CONFERENCE. SAN ANTONIO, TX, NOV. 25 - 29, 2001, IEEE GLOBAL TELECOMMUNICATIONS CONFERENCE, NEW YORK, NY : IEEE, US, Bd. VOL. 2 OF 6, 25. November 2001 (2001-11-25), Seiten 1344-1348, XP001099322 ISBN: 0-7803-7206-9**

**Beschreibung**

Die Erfindung bezieht sich auf ein nichtlineares Vorcodierungsverfahren auf Basis einer Modulo-Arithmetik zur sendeseitigen Vorentzerrung von zeit- und frequenzgleich in einem zwischen einer zentralen Sendestation und K dezentralen, nicht miteinander in Verbindung stehenden Empfangsstationen aufgebauten digitalen Broadcastkanal mit bekanntem Übertragungsverhalten zu übertragenden K Teilnehmersignalen aus Datensymbolen $a_k$ mit k von 1 bis K aus einer $M_k$-stufigen, einen Signalpunktabstand $A_k$ aufweisenden Signalkonstellation mit einer periodischen Mehrfachrepräsentation der ungestört übertragenen Datensymbole $a_k$ in für K empfangsseitige Modulo-Entscheidern kongruenten Datensymbolintervallen, einer zur Erzielung minimaler Sendeleistung erfolgenden Auswahl von Repräsentanten $v_k$ aus dem Wertevorrat $a_k + A_k . M_k . z_{kk}$ mit $z_{kk}$ aus der Menge der ganzen Zahlen und einer linearen Vorentzerrung der ausgewählten Repräsentanten $v_k$ unter Bildung von zu übertragenden Sendesignalen $x_k$.

Bei einem Broadcastkanal erfolgt die digitale Signalübertragung von mehreren Teilnehmersignalen, welche an einem gemeinsamen, also zentralen Sender (z.B. Basisstation) vorliegen, zu mehreren dezentralen, also über ein Versorgungsgebiet verstreuten Empfängern (z.B. Mobilstationen). Die Signalübertragung Telinehmersignal → Empfangssignal erfolgt unidirektional in Abwärtssenderichtung (downlink). Die Besonderheit einer Signalübertragung in einem Broadcastkanal liegt in der fehlenden Kooperationsmöglichkeit zwischen den einzelnen Empfängern. An keinem Empfänger sind die Signale der anderen Empfänger bekannt, eine Kommunikation zwischen den einzelnen Empfängern ist nicht möglich. Somit kann keine gemeinsame Datenverarbeitung der Empfangssignale in einem zentralen Empfänger erfolgen. Eine übertragungsverbessernde Signalaufbereitung kann somit nur sendeseitig im gemeinsamen Sender erfolgen. Die Signalübertragung kann leitungsgebunden, in der Regel aber eher leitungsungebunden erfolgen. Die grundlegende, jedoch nicht perfekte Unterscheidung der Signale für die richtige Zuordnung jedes Teilnehmersignals zum zugehörigen Empfänger kann entweder durch Codemultiplex (CDMA Code Division Multiple Access) oder durch eine räumlich getrennte Abstrahlung (SDMA Space Division Multiple Access) erfolgen. Der insgesamt entstehende Aufbau mit einer Vielzahl von Signaleingängen (Teilnehmersignale) und einer Vielzahl von Signalausgängen (Empfangssignale) wird als MIMO-System (Multiple Input Multiple Output) bezeichnet. Bei einer leitungsungebundenen Signalübertragung (Funkübertragung) werden darüber hinaus zunehmend Multiantennensysteme eingesetzt, bei denen die Signale über eine Vielzahl von Sendeantennen auf eine Vielzahl von Empfangsantennen übertragen werden, wobei die Antennenanzahlen gleich oder unterschiedlich sein können und Einfluss auf die Signalverarbeitung haben. Generell kann in einem MIMO-System die zeitliche und räumliche Diversität vorteilhaft ausgenutzt werden.

Das Problem, welches sich bei der Versorgung mehrerer Empfänger von einem gemeinsamen Sender aus ergibt, besteht darin, dass die einzelnen Teilnehmer nicht nur mit ihren eigenen, gewünschten Signalen versorgt werden, sondern sich diesen die Signale der anderen Teilnehmer überlagern und so Interferenzsignale entstehen. Das Auftreten von Übersprechen, sogenannten Interferenzen, ist gleichbedeutend mit dem Verlust an Orthogonalität, welche bei einem idealen Übertragungsverhalten mit entkoppelten Teilkanälen vorliegen würde. Sendeseitig muss daher versucht werden, unter Kenntnis der Teilnehmersignale und der im Broadcastkanal aktuell vorliegenden Übertragungsbedingungen, d.h., der individuellen Übersprechfaktoren zwischen den einzelnen Teilnehmern, ein geeignetes, gemeinsames Sendesignal so zu erzeugen, dass jeder Teilnehmer sein gewünschtes Signal erhält, jedoch nicht von den anderen Signalen gestört wird. Im Gegensatz zum dualen Problem, dem Vielfachzugriff von verstreuten Sendern auf einen gemeinsamen Empfänger (uplink), auch als Multiple Access bezeichnet, für das mittlerweile viele Lösungsansätze bekannt sind, finden sich in der Literatur nur wenige Methoden zur Lösung des beschriebenen Problems der Versorgung von räumlich getrennten, nicht kooperierenden Empfängern von einem gemeinsamen Sender aus. Das beschriebene Übertragungsszenarium lässt sich mathematisch kompakt und allgemein mittels der bekannten Kanalgleichung

$$\mathbf{y} = \mathbf{Hx} + \mathbf{n}$$

darstellen. Die gegebenenfalls schon vorverarbeiteten Sendesymbole der K Teilnehmer sind im Vektor $\mathbf{x} = [x_1, x_2,....,x_K]^T$ zusammengefasst (Vektor- und Matrizenschreibweise fett). Die komplexwertigen Elemente $h_{kl}$ der Kanalmatrix $\mathbf{H}$ beschreiben die Kopplungen zwischen den Übertragungspfaden $l \rightarrow k$, d.h. das Übersprechen des Teilnehmers $l$ auf den Teilnehmer k. Die ideale Kanalmatrix $\mathbf{H}$ ohne Kopplungen ist eine Diagonalmatrix, vorzugsweise eine Einheitsmatrix (Werte 1 auf der Hauptdiagonalen). Die Kanalmatrix $\mathbf{H}$ kann durch verschiedene bekannte Verfahren mit Rückkanal oder bei Duplexverfahren mit Zeitmultiplex auch ohne Rückkanal geschätzt werden und wird als am zentralen Sender bekannt angenommen (Vorliegen von der sogenannten Channel State Information CSI). Im Vektor n sind der unvermeidliche Rauscheinfluss (additives Rauschen) der beteiligten elektronischen Bauelemente und weitere externe Störungen zusammengefasst und die Elemente des Vektors $\mathbf{y} = [y_1, y_2,...,y_K]^T$ sind die Empfangssymbole an den einzelnen Empfängern. Beim ersten bekannten Ansatz für den Broadcastkanal handelt es sich um eine lineare Vorverzerrung der Teilnehmersignale (Linear Channel Inversion LCI oder linear preequalization). Aus den vorliegenden Datensymbolen

$a_k$ der Teilnehmer, zusammengefasst im Vektor **a**, werden die Sendesymbole $X_k$ (unter dem Begriff "Symbol" wird vorliegend eine die Information repräsentierende reelle oder komplexe Zahl verstanden) gemäß

$$x = H^{-1}a$$

gebildet, wobei $H^{-1}$ die zu **H** inverse Matrix darstellt, die jedoch nur bildbar ist, wenn die Übertragungsmatrix nicht singulär ist (Determinante der Matrix ungleich Null). Durch diese Maßnahmen wird jedoch erreicht, dass an den Empfängern keine Interferenzsignale entstehen und die Datensymbole $a_k$ (nur überlagert mit dem additiven Rauschen) direkt erscheinen. Es liegt also eine vollständige Entkopplung der einzelnen direkten Übertragungspfade k → k vor (Orthogonalität). Nachteil dieses Vorgehens ist jedoch die damit verbundene, zum Teil sehr starke, Erhöhung der benötigten mittleren Sendeleistung. Dieser Effekt ist umso größer, je stärker die Matrix $H^{-1}$ gegen eine singuläre Matrix strebt.

Eine starke Erhöhung der mittleren Sendeleistung wird vermieden, wenn anstelle einer linearen Vorverarbeitung der Teilnehmersignale eine gemeinsame nichtlineare Vorentzerrung (Vorcodierungsverfahren) zum Einsatz kommt. Bei den bekannten Vorcodierungsverfahren werden die gegenseitigen Interferenzsignale jedoch ebenfalls vollständig unterdrückt, sodass kein Diversitätsempfang genutzt werden kann. Vorcodierungsverfahren können aus der dualen Problemstellung zur vorliegenden Situation, also dem Mehrfachzugriff-Szenario (Multiple-Access-Problem, beispielsweise in uplink-Senderichtung, bei der mehrere, verteilte Nutzer auf einen gemeinsamen Empfänger zugreifen), entwickelt werden. Dort kann zur nichtlinearen Entzerrung eine sukzessive Eliminierung der Interferenzsignale erfolgen, die beispielsweise im bekannten V-BLAST-Verfahren implementiert ist und als die Interferenzsignale vollständig eliminierende (Zero-Forcing ZF) entscheidungsrückgekoppelte Entzerrung (Decision-Feedback-Equalization ZF-DFE) bezeichnet werden kann. Ein etabliertes Vorcodierungsverfahren ist nach Tomlinson und Harashima benannt (THP - Tomlinson-Harashima-Precoding) und basiert auf der Verwendung von Modulo-Arithmetik. Erstmalig beschrieben wird dieses Vorgehen von M. Tomlinson in der **Veröffentlichung I** "New Automatic Equaliser Employing Modulo Arithmetic" (Electronics Letters, vol. 7, Nos. 5/6, pp. 138-139, March 1971) sowie von H. Harashima und H. Miyakawa in der **Veröffentlichung II** "Matched Transmission Technique for Channels with Intersymbol Interference" (IEEE Transactions on Communications, Vol. com. 20, No. 4, pp. 774-780, August 1972). Ursprünglich wurden die nichtlinearen Vorcodierungsverfahren nur für Kanäle mit einem Ein- und einem Ausgang, jedoch mit auftretenden Intersymbolinterferenzen (ISI) entworfen. Es wurde später erkannt, dass diese auch auf MIMO-Kanäle anwendbar sind, um Interkanalinterferenzen (ICI) oder die Kombination aus ISI und ICI zu unterdrücken. Diese Übertragung wird unter Prägung des Begriffes MIMO-Precoding ausführlich in der **Veröffentlichung III** von R. Fischer et al. "Spacetime Transmission using Tomlinson-Harashima-precoding" (Proceedings of 4. ITG Conference on Source and Channel Coding, pp. 139-147, Berlin, January 2002) beschrieben.

Statt einer empfangsseitig rückgekoppelten Entzerrung, welche nur bei einem zentralen Empfänger möglich ist, kann im zentralen Sender diese Vorentzerrung eingesetzt werden. Damit dabei die mittlere Sendeleistung nicht sehr stark erhöht wird, arbeitet das THP nichtlinear. Eine Modulo-Reduktion mit einer sägezahnförmigen Kennlinie begrenzt dabei das Sendesignal $x_k$ bei einer Stufenzahl $M_k$ der für das jeweilige Datensymbol $a_k$ gewählten Signalkonstellation und einem gewählten Signalpunktabstand $A_k = 1$ auf den Bereich $(-M_k/2, +M_k/2]$. Dabei sei an dieser Stelle darauf hingewiesen, dass prinzipiell für jeden zu übertragenden Datenstrom eine eigene Stufenzahl $M_k$ und ein eigener Signalpunktabstand $A_k$ ausgewählt werden können. In der Regel werden aber diese Parameter zur Vereinfachung für alle zu sendenden Teilnehmersignale gleich gewählt. Bei beliebigen Datensignalen wird das Ausgangssignal durch eine einfache Additionsvorschrift stets zwischen den vorgegebenen Modulo-Grenzen gehalten, wodurch die Sendeleistung gegenüber linearen Verfahren deutlich verringert werden kann. Diese Begrenzung erfolgt ohne Gedächtnis Symbol für Symbol und ist äquivalent als Addition eines Korrektursymbols darstellbar, welches ein ganzzahliges Vielfaches von $A_k \cdot M_k$ annehmen darf. Die bei dieser Betrachtungsweise nun linear erscheinende Vorverzerrung hebt die Kanalverzerrungen vollständig auf. Prinzipiell wird bei der THP durch eine Mehrfachrepräsentation der Datensymbole $a_k$ und Auswahl geeigneter Repräsentanten $v_k$, welche dann linear vorverzerrt werden, das Sendesignal also gemäß $x = H^{-1}v$ gebildet, sodass eine nennenswerte Erhöhung der mittleren Sendeleistung vermieden werden kann. Durch die Mehrfachrepräsentation und Auswahl eines geeigneten Repräsentanten $v_k$ wird bei der Signalverarbeitung somit ein Freiheitsgrad mehr zur Verfügung gestellt. Bei einer binären Übertragung können die Binärsymbole "0" und "1" beispielsweise durch die Amplitudenwerte von +0,5 und -0,5 (Signalpunktabstand $A_k = 1$) dargestellt werden, was einer $M_k = 2$-stufigen Signalkonstellation entspricht. Ausgehend von den gewählten Amplitudenwerten kann beim Einsatz der Vorcodierung dann das Binärsymbol "0" beispielsweise durch .. -3,5; -1,5; +0,5; +2,5; +4,5; .. und das Binärsymbol "1" durch .. -2,5; -0,5; +1,5; +3,5; +5,5; ... bei einer jeweiligen Addition einer ganzen Zahl (Vielfaches von $M_k = 2$) dargestellt werden. Unter Kenntnis aller Teilnehmerdatensymbole $a_k$ (mit den Werten +0.5 und -0.5) werden dann die Repräsentanten $v_k$ (aus dem Wertevorrat (+0.5 + 2z) mit z als positiver oder negativer ganzer Zahl) so ausgewählt, dass nach der linearen Vorentzerrung des Kanals das Sendesignal $x = H^{-1}v$ eine kleine mittlere Leistung bzw. eine kleinstmögliche Amplitude besitzt.

Der Stand der Technik, von dem die vorliegende Erfindung ausgeht, wird in der **Veröffentlichung IV** von R. Fischer et al.: "MIMO-Precoding for Decentralized Receivers" (Proceedings of International Symposium on Information Theory - ISIT 02, Lausanne, Switzerland, June/July 2002, p. 496) offenbart. In Fortsetzung der Veröffentlichung **III** wird ein modifiziertes THP mit Verwendung der nichtlinearen Modulo-Arithmetik beschrieben, das für einen Broadcastkanal mit Downlinkszenario, bei dem die dezentralen Empfänger keinen Kontakt untereinander haben, beschrieben. Die sendeseitige nichtlineare Vorverarbeitung kann von der DFE abgeleitet werden und verfügt mathematisch über eine in Vorwärtsrichtung betriebene unitäre Matrix **F,** deren Aufgabe die Transformierung der Kanalmatrix auf Dreiecksgestalt ist, und eine in der nichtlinear arbeitenden Rückkopplungsschleife vorliegende Matrix **B** in Form einer unteren Dreiecksmatrize mit einer Einheits-Hauptdiagonalen. Hat die Gesamt-Kanalmatrix für das Übertragungsverhalten Dreiecksgestalt, so können die auftretenden Interferenzsignale schrittweise im rückgekoppelten Zweig des zentralen Senders mit Modulo-Arithmetik vorkompensiert werden. An den einzelnen Empfängern erscheinen dann die Daten, als ob die anderen Teilnehmer (mit parallelen Übertragungspfaden zu den anderen Empfängern) nicht existierten.

Da also auch beim Einsatz von nichtlinearen Vorcodierungsverfahren gegenseitige Interferenzsignale vollständig vermieden werden, können in jedem Empfänger mittels Schwellwertentscheidung, welche die periodische Fortsetzung der Amplitudenwerte bzw. Signalpunktabstände berücksichtigt (Modulo-Entscheider), die gesendeten Datensym-bole $a_k$ wiedergewonnen bzw. Schätzwerte dafür gebildet werden. Nachteil dieser Vorcodierungsverfahren ist jedoch, dass aufgrund der vollständigen Vermeidung gegenseitiger Interferenzsignale kein "Diversity-Gewinn" erzielbar ist. Jedes Teilübertragungssystem (ein Teilnehmersignal zum zugehörigen Empfänger) arbeitet so, als ob es über einen eigenen Kanal (mit einem Ein- und Ausgang) betrieben wird. Speziell bei Schwundkanälen ("Fading-Kanäle") ist damit zu Zeitpunkten schlechter Übertragungsbedingungen eine hohe Fehlerrate verbunden. Werden jedoch Signale gemeinsam verarbeitet und übertragen, ist prinzipiell ein Gewinn in Diversität zu erzielen. Besitzt bei zwei Übertragungswegen einer der beiden schlechte Übertragungsbedingungen, so ist mit hoher Wahrscheinlichkeit der andere Übertragungsweg gut nutzbar.

Ausgehend von der **Veröffentlichung VI** ist es daher die **Aufgabe** für die vorliegende Erfindung, ein nichtlineares Vorcodierungsverfahren der gattungsgemäßen Art für einen Broadcastkanal mit dezentralen Empfängern so weiterzubilden, dass dessen durch auftretende Interferenzsignale vorhandene Diversität genutzt werden kann. Dabei soll das Verfahren einfach in seinem Ablauf sein und eine hohe Übertragungsqualität gewährleisten. Die erfindungsgemäße **Lösung** für diese Aufgabe ist dem Hauptanspruch zu entnehmen. Vorteilhafte Weiterbildungen des erfindungsgemäßen nichtlinearen Vorcodierungsverfahrens sind den Unteransprüchen aufgezeigt. Diese werden im Folgenden im Zusammenhang mit der Erfindung näher erläutert.

Das erfindungsgemäße Vorcodierungsverfahren zur sendeseitigen, gemeinsamen Vorverarbeitung der Teilnehmersignale basiert auf dem oben beschriebenen THP und greift die Idee der periodischen Fortsetzung der möglichen Repräsentanten für die einzelnen Datensymbole $a_k$ wieder auf. Dabei werden die sich gegenseitig überlagernden Interferenzsignale nicht mehr zu Null unterdrückt, sondern durch die gemeinsame Vorverarbeitung einbezogen, indem auch diesen Interferenzsignalen Werte aus einem genau definierten Wertevorrat zugeordnet werden. Die für die Kennzeichnung der Interferenzsignale zugelassenen Werte sind dabei so gewählt, dass die empfangsseitigen Modulo-Entscheider auch bei Vorliegen der Interferenzsignale immer noch über das gesendete Datensymbol $a_k$ sicher entscheiden können. Da beim Einsatz des THP die empfangsseitigen Modulo-Entscheider ohnehin eine periodische Vieldeutigkeit der Datensymbole $a_k$ berücksichtigen, können nun die Interferenzsignale Werte annehmen, die dazu führen, dass ein anderer Repräsentant $V_k$ aus der möglichen Menge von Repräsentanten am Empfänger erscheint, der jedoch das gleiche Datensymbol $a_k$ repräsentiert. Dabei unterscheidet sich der Wertevorrat ($a_k + A_k \cdot M_k \cdot z_{kk}$, mit $z_{kk}$ als ganzer positiver oder negativer Zahl einschließlich Null) für die ungestört von Teilnehmer k auf Empfänger k übertragenen Datensymbole vom Wertevorrat ($A_k \cdot M_k \cdot z_{lk}$, mit $z_{lk}$ als ganzer positiver oder negativer Zahl einschließlich Null) für die von Teilnehmer 1 auf Empfänger k, wobei der Teilnehmer k ausgeschlossen ist, überlagerten Interferenzsymbole genau um das ursprüngliche Datensymbol $a_k$. Somit werden bei dem erfindungsgemäßen Vorcodierungsverfahren auftretende Interferenzsignale berücksichtigt und mitverarbeitet, indem diese zu einer zulässigen Verschiebung der modulo-codierten Teilnehmersignale in Entscheidungsintervalle für gleiche Datensymbole führen. Durch die periodische Verschiebung sind die Entscheidungsintervalle zwar andere, das Ergebnis der Entscheidung und deren Zuverlässigkeit sind aber identisch.

Bei dem oben aufgeführten Zahlenbeispiel für eine binäre Datenübertragung dürfen die gegenseitigen Interferenzsignale also die Werte... -4; -2; 0; +2; +4; ... (gerade Zahlen) annehmen und somit geradzahlig sein. Die Belegung der Interferenzsignale mit Vielfachen von ganzen Zahlen gilt jedoch auch für jede anderen Wahl von möglichen $M_k$-stu-figen Signalkonstellationen. Die erfindungsgemäße Vorcodierung ist auch auf die den komplexen Zahlenraum nutzenden Quadratur-Amplituden-Modulationsverfahren (beispielsweise 4QAM oder 16QAM) anwendbar. Der Datenvektor a besteht bei dieser Modulation aus Datensymbolen $a_k$ (auch als Signalpunkte bezeichnet) aus einem komplexwertigen QAM-Alphabet. Übertragen werden die Realteile der Symbole dann moduliert mit einer Kosinus-Schwingung, die Imaginärteile mit einer Sinus-Schwingung (Quadratur-Mischung). Bei der Verwendung von komplexwertigen Kanalbeschreibungen (komplexwertige Matrizeneinträge) ist es zweckmäßig, die Einträge zunächst in die reellwertigen Komponenten Real- und Imaginärteil aufzuspalten und als reelle Übertragung mit doppelt so vielen Teilsignalen darzustellen. Somit erhält die Kanalmatrix $\mathbf{H_r}$ die doppelte Dimension (2K). Empfangsseitig sind Demodulatoren vorgesehen, die die Spannungswerte phasenrichtig erkennen und wieder den reellen Komponenten Real- und Imaginärteil zuordnen. Schließlich erfolgt dann wieder eine Rücktransformation in den komplexwertigen Raum. Es gilt :

$$\begin{bmatrix} \mathrm{Re}\{y\} \\ \mathrm{Im}\{y\} \end{bmatrix} = \begin{bmatrix} \mathrm{Re}\{H\} & -\mathrm{Im}\{H\} \\ \mathrm{Im}\{H\} & \mathrm{Re}\{H\} \end{bmatrix} \cdot \begin{bmatrix} \mathrm{Re}\{x\} \\ \mathrm{Im}\{x\} \end{bmatrix} + \begin{bmatrix} \mathrm{Re}\{n\} \\ \mathrm{Im}\{n\} \end{bmatrix}$$

Dabei werden mit Re und Im der Real- und der Imaginärteil der jeweiligen Größe bezeichnet, die nach den gewählten Definitionen ein äquivalentes 2K-dimensionales, reellwertiges (MIMO)-Kanalmodell definieren gemäß:

$$\mathbf{y_r} = \mathbf{H_r}\, \mathbf{x_r} + \mathbf{n_r}.$$

Um die Entzerrung zu vereinfachen und die mögliche Diversität vorteilhaft zu nutzen, wird bei dem erfindungsgemäßen Vorcodierungsverfahren gedanklich der vorliegende Broadcastkanal in zwei Abschnitte unterteilt. Der erste Teil wird mittels Vorcodierung vollständig entzerrt, die Teilnehmersignale werden also entkoppelt, jedoch entsteht eine periodische Fortsetzung der Datensymbole. Der aktuelle Repräsentant $v_k$ für die Datensymbole $a_k$ wird aktuell aus den möglichen Werten, die sich um ganzzahlige Vielfache der ursprünglichen Stufenzahl $M_k$ unterscheiden, gewählt, sodass nach der linearen Vorverzerrung der gewählten Repräsentanten $v_k$ die benötigte Sendeleistung minimal ist. Der zweite Teil des Kanals wird nicht entzerrt, erzeugt somit Rest-Interferenzen zwischen den Teilnehmersignalen. Durch geeignete Wahl dieses Teils kann jedoch erreicht werden, dass zum einen die Rest-Interferenzen so beschaffen sind, dass sie sich nicht störend bei der Entscheidungsfindung in den Empfängern auswirken und zum andern die Entzerrung des ersten Teils des Kanals bei geringerer empfangsseitiger Verstärkung und somit geringerer Rauschverstärkung möglich ist bzw. die Diversität des Kanals zumindest teilweise genutzt werden kann. Da bei Verwendung von Vorcodierungsverfahren die Teilnehmersignale ohnehin periodisch fortgesetzt an den Empfängern erscheinen, dürfen die Rest-Interferenzen Werte annehmen, die mit dem Abstand der möglichen Repräsentanten übereinstimmt, die Interferenzen sich also lediglich in der (virtuellen) Wahl eines anderen Repräsentanten widerspiegeln, und deren Einfluss damit im ohnehin vorhandenen Modulo-Entscheider vollständig eliminiert werden. Entscheidender Vorteil der Erfindung ist die deutlich erhöhte Leistungseffizienz der Signalübertragung. Mittels des beanspruchten Vorcodierungsverfahrens kann bei gleicher mittlerer Sendeleistung wie bei den bekannten Vorcodierungsverfahren eine niedrigere Bitfehlerrate, also ein sicherer Empfang, erreicht werden. Insbesondere kann mittels des beanspruchten Vorcodierungsverfahrens an Diversität gewonnen werden, was sich in einem schnelleren Abfall der Bitfehlerrate bei Verbesserung der Übertragungsqualität des Broadcastkanals positiv bemerkbar macht.

Eine Teilentzerrung des Übertragungskanals entspricht einer Verwendung einer geänderten Kanalbeschreibung, mathematisch durch eine Überführung der Kanalmatrix $\mathbf{H_r}$ auf eine reduzierte Kanalmatrix $\mathbf{H_{red}}$ gegeben. Deren Multiplikation mit einer geeigneten Rest-Interferenzmatrix R, die die verbleibenden gegenseitigen Kopplungen beschreibt, ergibt dann wieder die Kanalmatrix $\mathbf{H_r}$ gemäß der Zerlegung :

$$\mathbf{H_r} = \mathbf{R}\ \mathbf{H_{red}}.$$

Die Rest-Interferenzmatrix $\mathbf{R}$ ist nur vom aktuellen Übertragungsverhalten des Kanals abhängig. Solange sich die Kanalmatrix $\mathbf{H}$ (bzw. $\mathbf{H_r}$) nicht ändert (Burstübertragung), ändert sich auch die Rest-Interferenzmatrix $\mathbf{R}$ nicht. Auf der Hauptdiagonalen ist die Rest-Interferenzmatrix $\mathbf{R}$ mit Einsen besetzt (direkte Signalpfade), alle anderen Elemente nehmen zeilenweise nur ganzzahlige (positive oder negative) Vielfache der Stufenzahl $M_k$ an. Bei einer binären Übertragung je Komponente sind diese Elemente nur gerade (positive oder negative) Zahlen:

$$R = \begin{bmatrix} 1 & & 2Z \\ & \ddots & \\ 2Z & & 1 \end{bmatrix}$$

Es können verschiedene Verfahren zur passenden Zerlegung der Kanalmatrix **H** angewandt werden. Durch die Anwendung der Monte-Carlo-Methode können die passenden Koeffizienten beispielsweise empirisch ermittelt werden. Optimale Zerlegungsmethoden sind nach ihrem Aufwand, der möglichst gering sein soll, und nach einer möglichst geringen, empfangsseitig erforderlichen Verstärkung (beispielsweise mittels einer automatischen Verstärkungsanpassung, Automatic Gain Control AGC) auszusuchen.

Andere Matrixreduktionen für MIMO-Kanäle sind aus dem Stand der Technik als Gitter(basis)reduktionen (Lattice Reduction) bekannt. In der **Veröffentlichung V** von H. Yao et al.: "Lattice-Reduction-Aided Detectors For MIMO-Communication Systems" (Proceedings of IEEE Globecom 2002, Taipei, Taiwan, November 2002) wird ein aufwandsgünstiges Verfahren zur Detektion bei Kanälen mit mehreren Ein- und Ausgängen beschrieben. Grundidee ist die Anwendung von mathematischen Methoden, die aus dem Gebiet der Lattice-Theorie (Theorie der regulären Gitter) bekannt sind. Der MIMO-Kanal wird dabei nicht vollständig linear entzerrt, sondern, ausgehend von einer anderen, geeigneteren Darstellung (reduzierte Basis), wird der Kanal nur teilweise entzerrt, sodass eine einfache komponentenweise (d.h. bzgl. der einzelnen Teilnehmersignale) Schwellwertentscheidung ermöglicht wird. Erst nach einer weiteren Nachverarbeitung werden die gewünschten Schätzwerte für die gesendeten Datensymbole erhalten. Die bekannte, speziell den Fall von zwei Sende- und zwei Empfangsantennen betrachtende Methode unterscheidet sich jedoch grundlegend von der Erfindung dadurch, dass dort in einem Mehrantennensystem empfangsseitig alle Teilnehmerempfangssignale bekannt sind und eine gemeinsame Signalverarbeitung möglich ist. Im Gegensatz dazu bezieht sich das Vorcodierungsverfahren nach der Erfindung auf das Problem in einem Mehrbenutzersystem mit ausschließlicher Abwärtssenderichtung (downlink). Hier liegt ein gemeinsamer Sender vor, an welchem alle Teilnehmersignale bekannt sind und verarbeitet werden können. Dagegen können die Empfänger, welche über ein Versorgungsgebiet verstreut sind, nicht kooperieren, d.h. jeder Empfänger sieht nur sein eigenes Empfangssignal (kein "joint processing" möglich). Die bekannte (Teil-)Entzerrung erfolgt ausschließlich empfangsseitig und ausschließlich linear, d.h. der reduzierte Anteil des Kanals wird mit Hilfe der inversen Kanalmatrix entzerrt. Die Erfindung arbeitet ausschließlich sendeseitig nichtlinear auf der Basis von THP.

Die **Veröffentlichung VI** von Ch. Windpassinger und R. Fischer: "Low-Complexity Near-Maximum-Likelihood Detection and Precoding for MIMO Systems using Lattice Reduction" (Proceedings of IEEE Information Theory Workshop 2003, pp. 345-348, Paris, France, March/April 2003) baut auf der **Veröffentlichung V** auf und erweitert diese. Das aufwandsgünstige Verfahren zur Detektion bei MIMO-Kanälen mit mehreren Ein- und Ausgängen wird von dem 2x2 Szenario auf den allgemeinen Fall von K Ein- und Ausgängen erweitert. Ferner wird die lineare Teilentzerrung durch eine nichtlineare Vorcodierung ersetzt. Der entscheidende Unterschied zur Erfindung liegt aber darin, dass sich diese Verfahren wiederum auf Mehrantennensysteme beziehen, bei welchen empfangsseitig alle Teil-Empfangssignale bekannt sind und eine gemeinsame Verarbeitung möglich ist. Das mit der vorliegenden Erfindung beanspruchte Vorverzerrungsverfahren ist hingegen für dezentrale Empfänger konzipiert, die nicht kooperieren können. Hierin liegt eine besondere Schwierigkeit für die Signalverarbeitung, weil diese nur sendeseitig erfolgen kann.

Zur Entzerrung des Kanalanteils, beschrieben durch den reduzierten Anteil **H**$_{red}$**,** wird diese reduzierte Matrix faktoriell weiter in geeignete Matrizen zerlegt. Diese Zerlegung kann beispielsweise folgende Form aufweisen:

$$\mathbf{P}^T \mathbf{H}_{red} = 1/g \ \mathbf{B} \ \mathbf{F}^{-1},$$

wobei **F** eine Matrix mit orthogonalen Spalten ist. **B** ist die untere Dreiecksmatrix, **P** eine Permutationsmatrix (jede Zeile und jede Spalte enthält genau eine 1), und g der empfangsseitige Verstärkungsfaktors (automatische Verstärkungsanpassung). Alle drei Matrizen und der Skalar lassen sind eindeutig bei vorgegebenem Kriterium (vorzugsweise minimales g) aus **H**$_{red}$ ermitteln.

Bei üblicher Wahl der Signalpunkte aus dem im oben angegebenen Zahlenbeispiel um ½ verschobenen Raster der ganzen Zahlen entsteht empfangsseitig ein systematischer Offset. Dieser kann entweder durch entsprechend modifizierte Empfänger oder einfacher durch eine sendeseitige Offsetkompensation, für die keine zusätzliche Sendeenergie benötigt wird, eliminiert werden. Diese erfolgt durch Subtraktion des Vektors o gemäß

$$\mathbf{o} = \mathbf{P}^T\ (\mathbf{R}\text{-}\mathbf{I})[1/2....1/2]^T.$$

**Ausbildungsformen der Erfindung** werden nachfolgend anhand der schematischen Figuren näher erläutert. Dabei zeigt :

**Figur 1**     einen Broadcastkanal,
**Figur 2**     die Entkopplung des Broadcastkanals durch ein Vorcodierungsverfahren aus dem Stand der Technik,
**Figur 3**     die Überlagerung des Broadcastkanals durch das Vorcodierungsverfahren nach der Erfindung,
**Figur 4**     ein Blockschema des Vorcodierungsverfahrens nach der Erfindung,
**Figur 5**     Bitfehlerkurven für verschiedene Entzerrungsverfahren und
**Figur 6**     die Verstärkungsfaktoren für verschiedene Entzerrungsverfahren.

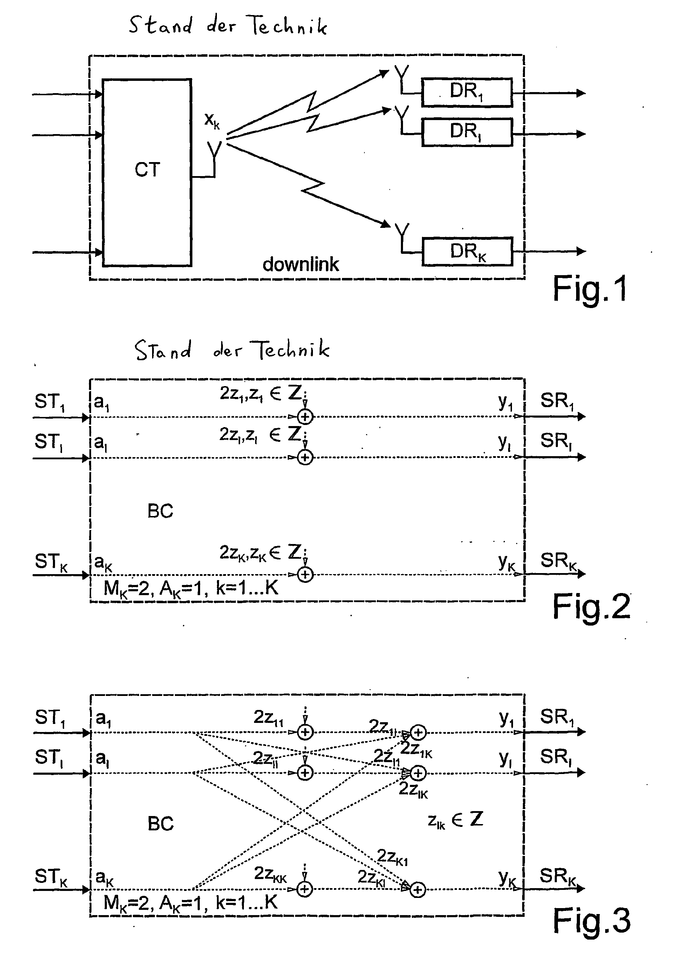

Die **Figur 1** zeigt schematisch den Aufbau eines Broadcastkanals **BC** zur digitalen Nachrichtenübertagung von **K** Teilnehmersignalen $\mathbf{ST}_k$ von einem gemeinsamen, zentralen Sender **CT** (beispielsweise Basisstation) zu K dezentralen Empfängern $\mathbf{DR}_k$ (beispielsweise Mobilstationen), die jeweils nur ihr Empfangssignal $\mathbf{SR}_k$ erhalten sollen und mit den benachbarten Empfängern $\mathbf{DR}_k$ keinen Kontakt haben. Die Übertragung erfolgt ausschließlich abwärts (downlink), im dargestellten Fall wird eine leitungsungebundene Funkübertragung genutzt. Der insgesamt betrachtete Broadcastkanal **BC** weist eine Vielzahl von Eingängen und eine Vielzahl von Ausgängen auf und kann deshalb als MIMO-Kanal (Multiple Input Multiple Output) interpretiert werden. Es liegt hier ein Mehrbenutzersystem vor, das von einem Mehrfachantennensystem, das ebenfalls einen MIMO-Kanal definiert, zu unterscheiden ist.

Die **Figur 2** zeigt für ein gewähltes Ausführungsbeispiel mit $M_k = 2$, $A_k = 1$ und k = 1,...,K den vollständig entkoppelten Broadcastkanal **BC** aufgrund der Anwendung des bekannten nichtlinearen Vorcodierungsverfahrens **THP** (Tomlinson-Harashima-Precoding) mit Verwendung von Modulo-Arithmetik, die bereits weiter oben erläutert wurde. Grundsätzlich wird dabei jedem (den Teilnehmersignalen $\mathbf{ST}_k$ zugeordneten) Datensymbol $a_k$ ein spezieller Wert eines ganzzahligen Vielfachen des Produkts der Stufenzahl $M_k$ und des Signalpunktabstands $A_k$ der Signalkonstellation ($A_k \cdot M_k \cdot z$ mit z als positiver oder negativer ganzer Zahl einschließlich Null) addiert und der bezüglich minimaler Sendeleistung beste Wert gewählt und der so erhaltene Signal-Repräsentant linear vorverzerrt. Die **THP** wird sendeseitig angewendet, um im zentralen Sender **CT** ein solches gemeinsames Sendesignal zu erzeugen, dass jeder dezentrale Empfänger $\mathbf{DR}_k$ sein gewünschtes Empfangssignal $\mathbf{SR}_k$ erhält. Auftretende Interferenzsignale werden bei diesem Vorcodierungsverfahren **THP** völlig eliminiert, sodass die Kanaldiversität nicht genutzt werden kann.

In der **Figur 3** dagegen wird die Anwendung des nichtlinearen Vorcodierungsverfahrens nach der Erfindung mit einer Berücksichtigung von Interferenzsignalen dargestellt. Bei diesem Verfahren werden die Interferenzsignale bei binärer (im gezeigten Ausführungsbeispiel mit $M_k = 2$, $A_k = 1$ und k = 1,...,K) Übertragung mit geraden, ganzzahligen Werten zwischen den Werten für die Teilnehmersignale $ST_k$ vielfach repräsentiert. Dabei werden den Interferenzsymbolen zwischen dem Datensymbol $a_l$ mit l von 1 bis K und ungleich k und dem Datensymbol $a_k$ periodische Repräsentanten aus dem Wertevorrat $A_k \cdot M_k \cdot z_{lk}$ mit $z_{lk}$ aus der Menge der ganzen Zahlen zugeordnet. Die Belegung der Interferenzsignale mit geraden, ganzzahligen Werten (geradzahlige Interferenzen) kann zutreffend mit **EIIP** (Even-Integer-Interference-Precoding) abgekürzt werden. In der **Figur 3** ist deutlich das dem **EIIP** zugrundeliegende Grundprinzip der teilweisen Kanalentzerrung zu erkennen, bei dem der Broadcastkanal **BC** virtuell in einen reduzierten Kanal ohne Kopplung (erste Additionsstellen), der einer nichtlinearen Vorcodierung (dargestellt in linearisierter Form) unterworfen wird, und eine Überlagerung der geeignet geformten Interferenzsignale (zweite Additionsstellen) unterschieden wird.

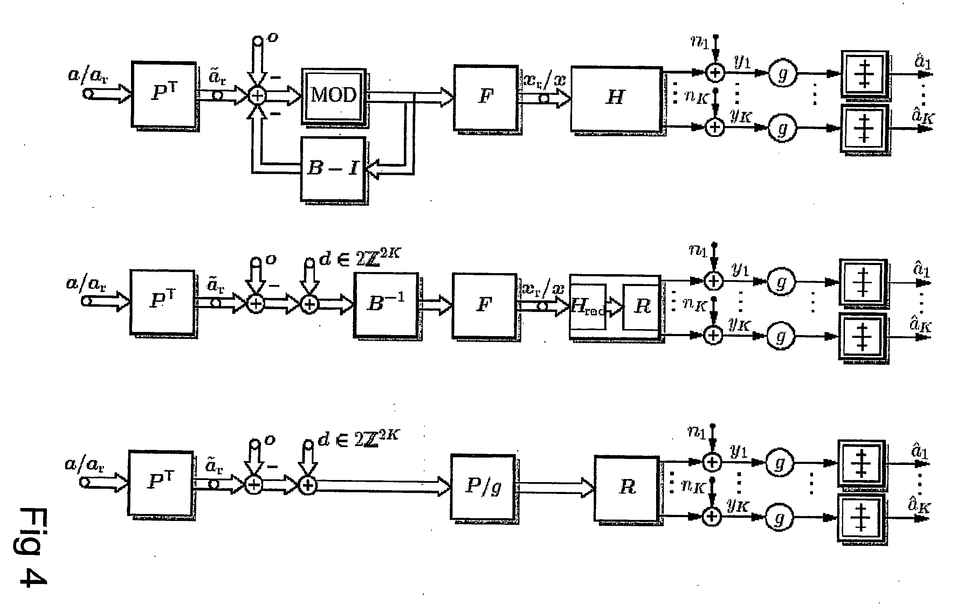

In **Figur 4** (oben) ist das gesamte Übertragungssystem zu sehen, wie es beim vorgeschlagenen teilentzerrenden Vorcodierungsverfahren **EIIP** vorliegt. Die Kanalmatrix **H** bezeichnet den eigentlichen Übertragungskanal mit K Teilnehmern. An dessen Eingang kann auf alle Sendesignale gemeinsam zugegriffen werden, was durch einen breiten, vektoriellen Pfeil gezeichnet ist. Am seinem Ausgang können die Teilnehmersignale $y_k$ mit k von 1...K nur einzeln verarbeitet werden, hier durch einzelne, skalare Pfeile gezeichnet. Empfangsseitig überlagert sich jeweils noch Rauschen $n_k$. In der gezeichneten, üblichen abstrakten Darstellung bestehen die Empfänger jeweils nur aus einer Skalierung (Automatic Gain Control) und einer Schwellwertentscheidung (in der **Figur 4** angedeutet durch ein g im Kreis und einen doppelt umrandeten Kasten mit Schwellwertentscheidung, wobei die doppelte Umrandung für eine nichtlineare Operation steht). Der Sender besteht aus den ersten drei Funktionsblöcken. Hierbei handelt es sich um eine von der vorliegenden Kanalmatrix **H** (bzw. $\mathbf{H}_{red}$) abhängigen Permutationsmatrix $\mathbf{P}^T$, um eine Rückkopplungsschleife mit einer nichtlinearen Modulo-Operation **MOD,** der Einheitsmatrix **I** und einer unteren Dreiecksmatrix **B** sowie um eine Matrix **F** mit orthogonalen Spalten. Die zu sendenden Datensymbole (aus einem QAM-Alphabet entnommen) sind im K-dimensionalen Vektor **a** zusammengefasst. Jeder Empfänger möchte sein Datensymbol $a_k$ empfangen (und nur dieses). Dieser Vektor mit komplexen Einträgen wird zunächst in einen reellen Vektor überführt (Auftrennen der komplexen Komponenten in Real- und Imaginärteil wie oben bereits beschrieben), symbolisiert durch die Bezeichnung **a/a$_r$**. Die weitere Verarbeitung im Sender erfolgt reellwertig. Der Sender produziert Sendesymbole, zusammengefasst im Vektor **x$_r$**. Diese werden dann in eine komplexwertige Darstellung übersetzt (Zusammenfassen von Real- und Imaginärteil zu einer komplexen Zahl; umgekehrter Vorgang wie oben), da der Kanal komplexwertige Eingangssymbole verarbeitet.

Die erste Stufe des Senders ist eine Permutation (Umsortierung) der Komponenten des Vektors **a$_r$**. Der nächste Funktionsblock ist die in Vorcodierungsverfahren bekannte nichtlinear arbeitende Rückkopplungsschleife. Hier werden die Interferenzsignale, welche bei der Übertragung über den Kanal auftreten, bereits vorkompensiert. Um die Sendeleistung nicht zu erhöhen, wird hier eine Modulo-Operation **MOD** verwendet, welche die Ausgangssymbole durch Addition/Subtraktion eines geeigneten ganzzahligen Wertes (entspricht einer periodischen Fortsetzung der originalen Signalkonstellation) auf ein fest vorgegebenes Intervall begrenzt. Alle Signalpunkte, die einen vorgegebenen Abstand $A_k \cdot M_k$ voneinander besitzen, beispielsweise bei binärer Übertragung ($M_k = 2$) und Signalpunktabstand $A_k=1$ gilt $A_k \cdot M_k = 2$, repräsentieren dieselbe Nachricht (Bitkombination). Schließlich wird noch eine unitäre Matrix **F** angewandt, welche die allgemeine Kanalmatrix ohne Sendeleistungserhöhung in eine untere Dreiecksmatrix überführt. Nur so kann, wie gewünscht, im Sender eine sukzessive Verarbeitung stattfinden.

Damit die Empfangssignale ohne Offset o an den Empfängern erscheinen, wird dieser vorweg im Sender bereits kompensiert. Die Berechnung der Matrizen **P, B** und **F** erfolgt eindeutig aus der reduzierten Form der Kanalmatrix gemäß den obigen Ausführungen. Die Vorcodierung entzerrt also nur diesen reduzierten Anteil; die Interferenzsignale aufgrund der Rest-Interferenzmatrix **R** (siehe oben) verbleiben.

Die Funktionsweise der Übertragung ist in der mittleren und unteren Zeile in **Figur 4** dargestellt. Zunächst ist die Vorcodierungsschleife durch ihre linearisierte Darstellung ersetzt. Die Modulo-Operation wird ersetzt durch die Addition eines Korrekturterms **d.** Die verbleibende, lineare Rückkopplungsschleife (Vorwärtsübertragung Eins; Rückkopplung **B-I**) realisiert dann genau die Matrix **B$^{-1}$** (inverse Matrix zu **B**). Die Kanalmatrix ist gemäß obiger Ausführungen als Kaskade aus der reduzierten Kanalmatrix **H$_{red}$** und der RestInterferenzmatrix **R** dargestellt. Aufgrund der speziellen Konstruktion der Matrizen **B** und **F** aus **H$_{red}$** ergibt die Kaskade aus **B$^{-1}$**, **F** und **H$_{red}$** genau die Matrix P/g (wiederum obige Gleichung), wodurch sich die in der unteren Zeile dargestellte Struktur ergibt. Die Permutationsmatrizen **P$^T$** und **P** heben sich auf; als Übertragungsmatrix verbleibt also nur noch die Rest-Interferenzmatrix **R.** Diese beschreibt die Interferenzen (Kopplungen) zwischen den Teilnehmersignalen. Da die Hautdiagonale Eins ist, werden die Nutzsignale ideal übertragen. Die Nebendiagonalelemente, welche das Übersprechen zwischen den Teilnehmern beschreiben, sind bei binärer Übertragung geradzahlig; es entstehen also nur geradzahlige Interferenzen. Diese beeinträchtigen aber die vorhandene Modulo-Entscheidung nicht.

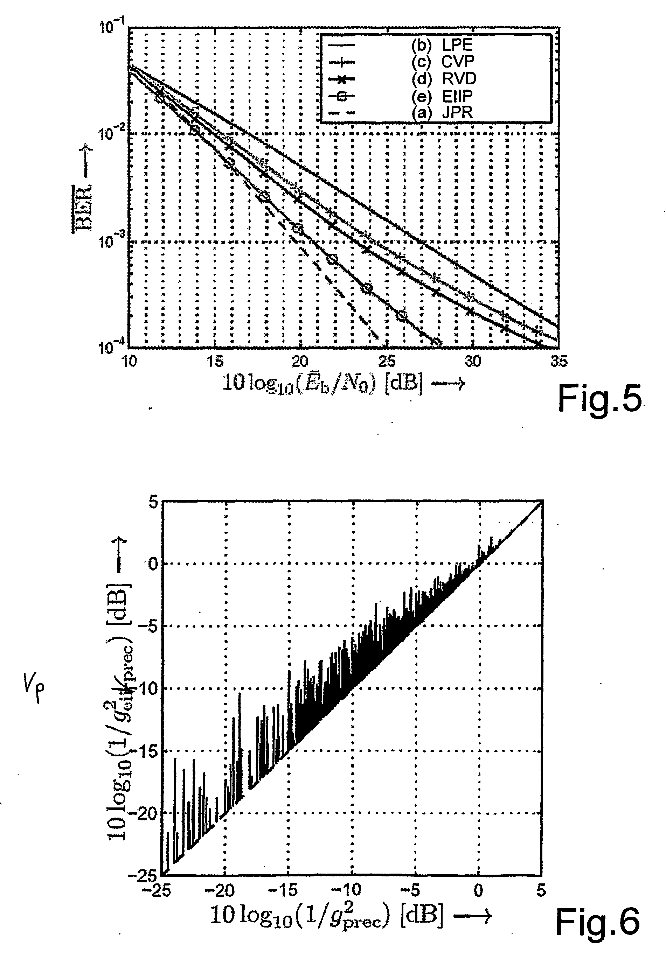

In der **Figur 5** sind die mittleren Bitfehlerkurven der Nutzer für verschiedene Signalverarbeitungsverfahren dargestellt. Aufgetragen ist die jeweils mittlere Bitfehlerrate BER über dem Verhältnis (ausgedrückt in dB) aus der mittleren Sendeenergie $E_b$ pro Informationsbit, und der spektralen Leistungsdichte $N_0$ der additiven Rauschstörung. Angenommen sind zwei Nutzer (K=2), was relativ oft vorkommt, wenn beispielsweise neben einer Vielzahl von Nutzern mit niedrigen Datenraten und Sendeleistungen zwei Nutzer mit hohen Datenraten und Sendeleistungen auftreten, auf welche sich die Vorverarbeitung dann beschränkt. Aufgrund des gewählten Verfahrens speziell die Zerlegung der reduzierten Kanalmatrix **H$_{red}$** in g, **F**, **B** und **P** ergibt sich für beide Nutzer das gleiche Bitfehlerverhalten. Das günstigste Bitfehlerverhalten zeigt eine gemeinsame Signalverarbeitung am Empfänger (joint processing at receiver **JPR, Kurve a),** das ungünstigste eine sendeseitig rein lineare Kanalinversion (linear preequalization **LPE, Kurve b).** Zunehmend günstigeres Fehlerverhalten zeigt der Übertragungskanal dann mit einer sendeseitigen nichtlinearen komplexwertigen Vorcodierung (complex-valued precoding **CVP, Kurve** c) und einer reellwertigen Vorcodierung (real-valued precoding **RVP, Kurve d**). Das der empfangsseitigen gemeinsamen Signalverarbeitung am nächsten kommende Fehlerverhalten wird mit dem Vorcodierungsverfahren nach der Erfindung mit einer Kanalteilentzerrung unter Interferenzberücksichtigung erreicht **(EIIP, Kurve e).**

Durch das deutlich verbesserte Fehlerverhalten bei dem nichtlinearen Vorcodierungsverfahren nach der Erfindung **EIIP** sind trotz minimierter Sendeleistung auf der Empfangsseite wesentlich kleinere Verstärkungsfaktoren erforderlich. In der **Figur 6** sind für ein Übertragungssystem mit zwei Nutzern (K=2) die Verstärkungsfaktoren g$_{EIIP-PREC}$ bei Anwendung der nichtlinearen Vorcodierung gemäß der Erfindung gegenüber den Verstärkungsfaktoren g$_{PREC}$ aufgetragen, welche sich bei einem die Interferenzen nicht berücksichtigendem reellwertigen Vorcodierungsverfahren ergeben (die Darstellung erfolgt in dB als Kehrwert des Quadrats, da der Signal-zu-Rausch-Abstand SNR zu diesem Term proportional ist und dieser Term direkt die Leistungsfähigkeit des Verfahrens beschreibt). Die Größe der Verstärkungsfaktoren g$_{PREC}$ ist auf der x-Achse aufgetragen und über die Gerade y = x auch als unteres Ende der Balken erkennbar. Die jeweils korrespondierenden Verstärkungsfaktoren g$_{EIIP-PREC}$ sind als oberes Ende der Balken dargestellt. Die Länge der Balken gibt dann den erzielbaren Gewinn an. Deutlich sind große Gewinne speziell in Situationen, in welchen die bekannten Verfahren sehr schlechte Ergebnisse liefern, erkennbar.

**Bezugszeichenliste**

| | |
|---|---|
| $A_k$ | Signalpunktabstand für das Sendesymbol $a_k$ |
| AGC | Automatic Gain Control |
| **a** | Datenvektor |
| $a_k$ | k-tes Datensymbol mit k von 1...K |
| $a_r$ | reellwertiger Datenvektor |
| **B** | untere Dreiecksmatrix mit 1 auf der Hauptdiagonalen |
| **BC** | Broadcastkanal zur digitalen Nachrichtenübertagung |
| BER | Bitfehlerrate |
| **CT** | zentraler Sender |
| $DR_k$ | dezentraler Empfänger |
| $E_b$ | mittlere Sendeenergie pro Bit |
| **EIIP** | Even-Integer-Interference-Precoding |
| **F** | unitäre (orthogonale) Matrix |
| g | Verstärkungsfaktor |
| **H** | Kanalmatrix |
| $H_{red}$ | reduzierte Kanalmatrix |
| **I** | Einheitsmatrix |
| I, k | Teilnehmerindex |
| K | Anzahl der Teilnehmer bzw. Empfänger |
| $M_k$ | Stufenzahl der Signalkonstellation für das Sendesymbol $a_k$ |
| **MIMO** | Multiple Input Multiple Output |
| **MOD** | nichtlineare Modulo-Reduktion |
| $n_k$ | k-tes Rauschsignal mit k von 1...K |
| **o** | Offset |
| **P** | Permutationsmatrix |
| **PREC** | Vorkodierungsverfahren |
| QAM | Quadratur-Amplituden-Modulation |
| **R** | Rest-Interferenzmatrix |
| $SR_k$ | Empfangssignal |
| $ST_k$ | Teilnehmersignal |
| **THP** | Tomlinson-Harashima-Precoding |
| $x_r$ | reellwertiger Sendevektor |
| $y_k$ | k-tes Teilnehmersignal mit k von 1...K |
| z | positive oder negative ganze Zahl einschließlich Null |

**Patentansprüche**

1. Nichtlineares Vorcodierungsverfahren auf Basis einer Modulo-Arithmetik zur sendeseitigen Vorentzerrung von zeit- und frequenzgleich in einem zwischen einer zentralen Sendestation (CT) und K dezentralen, nicht miteinander in Verbindung stehenden Empfangsstationen ($DR_k$) aufgebauten digitalen Broadcastkanal (BC) mit bekanntem Übertragungsverhalten zu übertragenden K Teilnehmersignalen aus Datensymbolen $a_k$ mit k von 1 bis K aus einer $M_k$-stufigen, einen Signalpunktabstand $A_k$ aufweisenden Signalkonstellation mit einer periodischen Mehrfachrepräsentation der ungestört übertragenen Datensymbole $a_k$ in für K empfangsseitige Modulo-Entscheidern kongruenten Datensymbolintervallen, einer zur Erzielung minimaler Sendeleistung erfolgenden Auswahl von Repräsentanten $v_k$ aus dem Wertevorrat $a_k + A_k \cdot M_k \cdot z_{kk}$ mit $z_{kk}$ aus der Menge der ganzen Zahlen und einer linearen Vorentzerrung der ausgewählten Repräsentanten $v_k$ unter Bildung von zu übertragenden Sendesignalen $x_k$,
**dadurch gekennzeichnet, dass**
die im Broadcastkanal (BC) auftretenden, sich den Datensymbolen $a_k$ und deren periodischer Mehrfachrepräsentation überlagernden Interferenzsymbole aufgrund übersprechender Teilnehmersignale ($ST_k$) sendeseitig durch eine angepasste periodische Mehrfachrepräsentation in die periodische Mehrfachrepräsentation der Datensymbole $a_k$ einbezogen und von den K empfangsseitigen Modulo-Entscheidern eliminiert werden, wobei den Interferenzsymbolen zwischen dem Datensymbol $a_1$ mit I von 1 bis K und ungleich k und dem Datensymbol $a_k$ periodische Repräsentanten aus dem Wertevorrat $A_k \cdot M_k \cdot z_{lk}$ mit $z_{lk}$ aus der Menge der ganzen Zahlen zugeordnet werden.

**2.** Nichtlineares Vorcodierungsverfahren nach Anspruch 1,
**dadurch gekennzeichnet, dass**
mathematisch das gewünschte Übertragungsverhalten des Broadcastkanals (BC) durch eine faktorielle Zerlegung der das aktuelle Übertragungsverhalten beschreibenden, sendeseitig bekannten Kanalmatrix **H** in eine vorzuentzerrende, reduzierte Kanalmatrix $\mathbf{H}_{red}$ und eine Rest-Interferenzmatrix **R** erreicht wird gemäß :

$$\mathbf{H} = \mathbf{R}\ \mathbf{H}_{red},$$

wobei die Rest-Interferenzmatrix **R** auf der Hauptdiagonalen nur den Wert 1 annimmt und alle anderen Elemente zeilenweise ganzzahlige Vielfache der Stufenzahl $M_k$ der verwendeten Signalkonstellation sind und wobei die reduzierte Kanalmatrix $\mathbf{H}_{red}$ durch eine faktorielle Zerlegung in eine Matrix **F** mit orthogonalen Spalten, eine untere Dreiecksmatrix **B** und eine Permutationsmatrix **P** unter Einführung eines empfangsseitigen skalaren Verstärkungsfaktors g gewonnen wird gemäß:

$$\mathbf{P}^T \mathbf{H}_{red} = 1/g\ \mathbf{B}\ \mathbf{F}^{-1}.$$

**3.** Nichtlineares Vorcodierungsverfahren nach Anspruch 1 oder 2,
**dadurch gekennzeichnet, dass**
bereits sendeseitig eine Offsetkompensation (**o**) in den zu übertragenden Sendesignalen $x_k$ durchgeführt wird.

**Claims**

**1.** Non-linear precoding method based on modulo arithmetic for pre-equalisation on the transmission side of K user signals to be transmitted at the same time and frequency in a digital broadcast channel (BC) with known transmission characteristics set up between a central transmitting station (CT) and K decentralised, non-interconnected receiving stations ($DR_k$), where the user signals consist of data symbols $a_k$ with k from 1 to K from an $M_k$-level signal constellation having a signal point spacing $A_k$ where the data symbols $a_k$ transmitted without interference have a periodic multiple representation, in data symbol intervals, which are congruent for K receiving-side modulo decision processes, a selection of representatives $V_k$ which is made from the set of values $a_k + A_k \cdot M_k \cdot z_{kk}$ with the object of minimising the transmission power, where $z_{kk}$ is from the set of integers, and linear pre-equalisation of the selected representatives $v_k$ to form transmission signals $x_k$ to be transmitted,
**characterised in that**
the interference symbols, which arise in the broadcast channel (BC) due to crosstalk from user signals ($ST_k$) and are superimposed on the data symbols $a_k$ and their periodic multiple representation, are on the transmission side incorporated into the periodic multiple representation of the data symbols $a_k$ by means of an appropriately modified periodic multiple representation, and are eliminated by the K receiving-side modulo decision processes, where periodic representatives from the set of values $A_k \cdot M_k \cdot z_{lk}$, with $z_{lk}$ from the set of integers, are assigned to the interference symbols between the data symbol $a_l$ with l from 1 to K and not equal to k and the data symbol $a_k$.

**2.** Non-linear precoding method according to Claim 1,
**characterised in that**
mathematically the required transmission characteristics of the broadcast channel (BC) are achieved by a factorisation of the channel matrix H, which describes the current transmission characteristics and is known on the transmission side, into a reduced channel matrix $H_{red}$ to be pre-equalised and a residual interference matrix R such that:

$$\mathrm{H} \;=\; \mathrm{R}\ \mathrm{H}_{red},$$

where the residual interference matrix R assumes only the value 1 on the main diagonal and all the other elements are row-wise integral multiples of the level number $M_k$ of the signal constellation used, and where the reduced channel matrix $H_{red}$ is obtained by factorisation into a matrix F with orthogonal columns, a lower triangular matrix B and a permutation matrix P with the introduction of a receiving-side scalar gain factor g such that:

$$P^T H_{red} = 1/g \ B \ F^{-1}.$$

**3.** Non-linear precoding method according to Claim 1 or 2,
**characterised in that**
offset compensation (o) is already carried out on the transmission side in the transmission signals $x_k$ to be transmitted.

## Revendications

**1.** Procédé de précodage non linéaire sur la base d'une arithmétique modulo pour la précorrection de distorsion, côté émission, de K signaux d'abonné à transmettre simultanément et sur une même fréquence sur un canal de diffusion numérique (BC) à comportement de transmission connu construit entre une station d'émission centralisée (CT) et K stations de réception décentralisées ($DR_K$) non communicantes entre elles, et composés de symboles de données $a_k$, avec k compris entre 1 et K, issus d'une constellation de signaux à $M_k$ niveaux présentant une distance entre points de signal $A_K$, avec une représentation multiple périodique des symboles de données $a_k$ transmis sans perturbation dans des intervalles de symboles de données congruents à K décideurs modulo côte réception, une sélection de représentants $v_k$ dans le stock de valeurs $a_k + A_k \cdot M_k \cdot z_{kk}$, avec $z_{kk}$ appartenant à l'ensemble des nombres entiers, en vue d'obtenir une puissance d'émission minimale, et une précorrection de distorsion linéaire des représentants $v_k$ sélectionnés en formant des signaux d'émission $x_k$ à transmettre,
**caractérisé en ce que**
les symboles d'interférence apparaissant dans le canal de diffusion (BC) et se superposant aux symboles de données $a_k$ et à leur représentation multiple périodique en raison de signaux d'abonné diaphoniques ($ST_k$) sont intégrés côté émission, à l'aide d'une représentation multiple périodique adaptée, dans la représentation multiple périodique des symboles de données $a_k$ et éliminés par les K décideurs modulo côté réception, auxdits symboles d'interférence entre le symbole de données $a_1$, avec l compris entre l et K et différent de k, et le symbole de données $a_k$ étant attribués des représentants périodiques issus du stock de valeurs $A_k \cdot M_k \cdot z_{1k}$, avec $z_{1k}$ appartenant à l'ensemble des nombres entiers.

**2.** Procédé de précodage non linéaire selon la revendication 1,
**caractérisé en ce que**
on obtient mathématiquement le comportement souhaité de transmission du canal de diffusion (BC) par une décomposition factorielle de la matrice de canal H, connue côté émission et décrivant le comportement actuel de transmission, en une matrice de canal réduite $H_{red}$ dont la distorsion doit être précorrigée et une matrice d'interférence résiduelle R selon :

$$H = R \ H_{red},$$

la matrice d'interférence résiduelle R sur la diagonale principale ne prenant que la valeur 1 et tous les autres éléments, ligne par ligne, étant des multiples entiers du nombre de niveaux $M_k$ de la constellation de signaux utilisée, et la matrice de canal réduite $H_{red}$ étant obtenue par une décomposition factorielle en une matrice F à colonnes orthogonales, une matrice triangulaire inférieure B et une matrice de permutation P, en introduisant un facteur d'amplification scalaire g côté réception selon :

$$P^T \ H_{red} = 1/g \ B \ F^{-1}.$$

**3.** Procédé de précodage non linéaire selon la revendication 1 ou 2,
**caractérisé en ce que**
on effectue, côté émission déjà, une compensation offset (o) dans les signaux d'émission $x_k$ à transmettre.

Stand der Technik

Fig.1

Stand der Technik

Fig.2

Fig.3

Fig 4

Fig.5

$V_p$

Fig.6